# EUROPEAN PATENT SPECIFICATION

(11) **EP 4 376 196 B1**
(45) Date of publication and mention of the grant of the patent: **22.04.2026**
(21) Application number: 23820153.7
(22) Date of filing: 09.06.2023
(51) Int. Cl.: H01M 50/358, H01M 50/105, H01M 50/249, H01M 50/593, H01M 50/502, H01M 50/211, H01M 50/202, H01M 50/178, H01M 50/271, H01M 50/30, H01M 50/507, H01M 50/55

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 10.06.2022 KR 20220070855; 27.04.2023 KR 20230055794
(43) Date of publication of application: 29.05.2024
(73) Proprietor: LG Energy Solution, Ltd., Seoul 07335 (KR)
(72) Inventor: PARK, Jin-Yong, Daejeon 34122 (KR); KWON, Woo-Yong, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR)
(74) Representative: Goddar, Heinz J.
(86) International application number: PCT/KR2023/007983
(87) International publication number: WO 2023/239218

(56) References cited:
- EP-A1- 4 276 997
- CN-A- 113 273 026
- CN-A- 113 794 011
- CN-A- 113 794 011
- CN-U- 216 015 510
- CN-U- 216 161 825
- CN-U- 216 597 893
- KR-A- 20210 063 939
- US-A1- 2022 181 727

## Description

### TECHNICAL FIELD

The present disclosure relates to a battery pack and a vehicle including the same, and more specifically, to a battery pack having improved stability and a vehicle including the same. The present application claims priority to Korean Patent Application No. 10-2022-0070855 filed on June 10, 2022 and Korean Patent Application No. 10-2023-0055794 filed on April 27, 2023.

### BACKGROUND ART

As the technology development and demand for various mobile devices, electric vehicles, energy storage systems (ESSs), and the like increase significantly, the interest in and demand for secondary batteries as an energy source are rapidly increasing.

Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, secondary batteries may be classified into can-type batteries in which electrode assemblies are embedded in a metal can and pouch-type batteries in which electrode assemblies are embedded in a pouch of aluminum laminate sheets, depending on the shape of an exterior material.

Recently, battery modules have been widely used for driving or energy storage in medium to large-sized devices such as electric vehicles or energy storage systems.

A conventional battery pack includes one or more battery modules and a control unit for controlling charge/discharge of the battery modules inside a pack case. Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside a pack case to form a battery pack. In particular, in the case of pouch-type batteries, they have advantages in various aspects, such as light weight and small dead space during stacking, but have problems in that they are vulnerable to external impact and have somewhat poor assembly. Therefore, it is common to manufacture a battery pack in a form in which a plurality of cells are first modularized and then accommodated inside a pack case.

However, in the case of a conventional battery pack, it may be disadvantageous in terms of energy density, assemblability, coolability, and the like due to modularization. In particular, in the case of a pouch-type battery cell, swelling may occur, and conventional battery packs have a problem of being difficult to adequately cope with such a swelling situation.

In addition, in the case of a conventional battery pack, it may be disadvantageous in terms of energy density, assemblability, coolability, and the like due to modularization.

In addition, in the case of a conventional battery module or battery pack, it may be vulnerable to thermal events. **In** particular, when a thermal event occurs inside the battery module or battery pack, thermal runaway may occur, resulting in flames and, in severe cases, explosions.

CN 113 794 011 A describes a battery and battery pack designed to address the issue of uncontrolled thermal runaway in soft pack cells. The battery includes a housing assembly that encloses a number of soft pack cells and features vent holes to facilitate directed gas discharge during thermal events, enhancing safety. The battery further incorporates busbars having terminals for external connections and allowing for series, parallel, or mixed configurations of the cells. Insulating brackets support the ends of the soft pack cells and enclose the busbars whose terminals are exposed, ensuring stability and electrical insulation while facilitating the discharge of gases through aligned vent holes of insulating brackets and side plates which form a surface of the housing assembly.

CN 113 273 026 A describes a battery module and battery pack having an exhaust structure to safely discharge gases generated within the module. The battery module includes a frame accommodating a battery cell stack and a busbar frame with multiple slots for connection of battery cell electrodes to the busbar and for discharge of exhaust gases. An end plate covers the busbar frame and provides protection against external impacts as well as an exhaust part that allows the exhaust gases to be expelled, thus minimizing the risk of explosion and fire during overcharging scenarios.

EP 4 276 997 A1 describes a battery module designed to enhance safety during thermal events. The module includes a cell assembly with multiple battery cells connected through electrode leads, housed within a body frame providing structural integrity. A bus bar assembly includes an insulating bus bar housing that supports a conductive module bus bar. The electrode leads pass through slits of the bus bar housing and are welded to the module bus bar. A cover member adheres to the module bus bar and the bus bar housing together with the electrode lead to protect the electrode leads from thermal events, prevent short circuits and maintain stability of the welded connections. A venting unit on a top side or bottom side of the module case enables discharge of venting gases to prevent damage from high temperatures.

US 2022/181727 A1 describes a battery module that incorporates a cell stack composed of multiple pouch-type battery cells. A housing body forms the exterior of the battery module and provides a protective enclosure for the cell stack, while an end plate covers open ends of the module housing. A bus bar assembly includes an insulating support plate to support a conductive bus bar, and a connection terminal that extends outwardly via a through hole of the end plate to facilitate external electrical connections. A sealing protective member prevents a fused (sealed) portion of the battery cell from being opened by an internal pressure of the battery cell.

### DISCLOSURE

### Technical Problem

The present disclosure is designed to solve the problems of the related art, and therefore the present disclosure is directed to providing a battery pack that is excellent in various aspects such as swelling response performance and a vehicle including the same.

Also, in order to solve another problem, the present disclosure is directed to providing a battery pack capable of securing excellent stability when a thermal event occurs and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery pack according to claim 1 is proposed for solving the above-described problem.

The cell cover may be configured to partially surround the pouch-type battery cell so that a portion provided with the electrode lead is exposed to the outside.

The bus bar assembly may be configured to cover at least a portion of the portion where the electrode lead is provided.

At least a portion of the bus bar assembly may be inserted into the cell cover.

The bus bar assembly may include a bus bar terminal connected to the electrode lead; and a bus bar frame configured such that the bus bar terminal is seated, and including a lead accommodation portion accommodating the electrode lead and a through portion configured to allow gas generated from at least a portion of the wrapped pouch-type battery cell to move.

The end cover may be coupled to the bus bar assembly.

The end cover may include a first venting portion communicating with the through portion.

The intermediate cover may be coupled to the bus bar assembly.

The intermediate cover may be configured such that the end cover is coupled.

The intermediate cover may include a communication portion configured to communicate with the through portion.

The gas may be discharged into the inner space of the pack case through the first venting portion.

The communication portion may include a mesh member.

The intermediate cover may include an insulating material to block an electrical connection between the bus bar assembly and the end cover.

The pack case may include a second venting portion configured to communicate with the first venting portion to discharge the gas to the outside of the battery pack.

The cell cover includes a first side cover portion covering one side surface of the wrapped pouch-type battery cell; a second side cover portion facing the first side cover portion and covering the other side surface of the wrapped pouch-type battery cell; and a top cover portion connecting the first side cover portion and the second side cover portion and covering an upper portion of the wrapped pouch-type battery cell.

The cell cover may be configured to support the pouch-type battery cell in a state of standing between the first side cover portion and the second side cover portion.

The cell cover may include an insulating coating layer on at least a portion of the inner surface of the first side cover portion and the inner surface of the second side cover portion.

The cell cover may include an adhesive member on at least a portion of the outer surface of the first side cover portion and the outer surface of the second side cover portion.

The battery pack further includes an intermediate cover provided between the bus bar assembly and the end cover.

The first side cover portion and the second side cover portion include portions protruding further toward the electrode lead than the top cover portion.

The bus bar assembly, the intermediate cover, and the end cover are inserted into and in contact with the inner side of the first side cover portion and the inner side of the second side cover portion, respectively.

A vehicle according to the present disclosure may include a battery pack according to the present disclosure.

### Advantageous Effects

According to one aspect of the present disclosure, a plurality of pouch-type battery cells may be stably accommodated inside a pack case without a configuration such as a stacking frame like a plastic cartridge, a separate module case, or the like.

Moreover, a cell to pack (CTP) type battery pack using pouch-type battery cells may be implemented more efficiently. That is, the battery pack may be provided in a form of directly accommodating the pouch-type battery cells inside the pack case, rather than accommodating the pouch-type battery cells inside a separate module case and then accommodating the module case inside the pack case.

According to another aspect of the present disclosure, a bus bar assembly is inserted into a cell cover, and thus the cell cover and the bus bar assembly may be efficiently coupled by such a structure. In addition, an end cover covers a portion of the pouch-type battery cell that is not covered by the cell cover, thereby providing more stable protection.

According to still another aspect of the present disclosure, when the gas and/or flame are generated due to swelling or thermal runaway in the pouch-type battery cell, they may be discharged to the outside of the cell unit through a first venting portion. Therefore, by inducing side venting, it is possible to prevent the gas and/or flame from being randomly discharged through the open portion of the cell cover.

According to still another aspect of the present disclosure, the flow of flame that may occur in the pouch-type battery cell may be primarily blocked by an intermediate cover, thereby reducing the intensity of the flame and preventing the rapid discharge of the flame to the first venting portion. In addition, a short circuit caused by contact between the bus bar assembly and the end cover may be prevented.

As described above, according to the present disclosure, it is possible to provide a battery pack that is excellent in various aspects such as swelling response performance and a vehicle including the same. In addition, it is possible to provide a battery pack capable of securing excellent safety when a thermal event occurs and a vehicle including the same.

### DESCRIPTION OF DRAWINGS

FIG. 1 is an exploded view showing some components of a battery pack according to the present disclosure.
FIG. 2 is a combined view showing some components of a battery pack according to the present disclosure.
FIG. 3 is an exploded view showing some components of a battery pack according to the present disclosure.
FIG. 4 is a perspective view of a pouch-type battery cell included in a battery pack according to the present disclosure.
FIG. 5 is a perspective view of a cell cover included in a battery pack according to the present disclosure.
FIG. 6 is a view showing a bus bar assembly included in a battery pack according to the present disclosure.
FIG. 7 is a view showing a partial cross-section of a bus bar assembly included in a battery pack according to the present disclosure.
FIG. 8 is a view showing an end cover included in a battery pack according to the present disclosure.
FIG. 9 is a view showing an intermediate cover included in a battery pack according to the present disclosure.
FIG. 10 is a view showing a partial cross-section of an intermediate cover included in a battery pack according to the present disclosure.
FIGS. 11 and 12 are views showing partial cross-sections of some components of a battery pack according to the present disclosure.
FIG. 13 is an exploded view showing some components of a battery pack according to the present disclosure.
FIG. 14 is a view showing a vehicle according to the present disclosure.

### BEST MODE

Hereinafter, preferred embodiments of the present disclosure will be described in detail with reference to the accompanying drawings. The accompanying drawings herein illustrate preferred embodiments of the present disclosure and serve to further understand the technical aspects of the present disclosure together with the following detailed description, so the present disclosure should not be construed as limited to those described in the drawings. The same reference numerals refer to the same components. Also, in the drawings, the thickness, ratio, and dimensions of the components may be exaggerated for effective description of the technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the term may change depending on the position of the stated element or an observer.

Therefore, since the embodiments described herein and the configurations shown in the drawings are only the most preferred embodiments of the present disclosure and do not represent all of the technical aspects of the present disclosure, it should be understood that there may be various equivalents and modifications to be substituted for them at the time of this application.

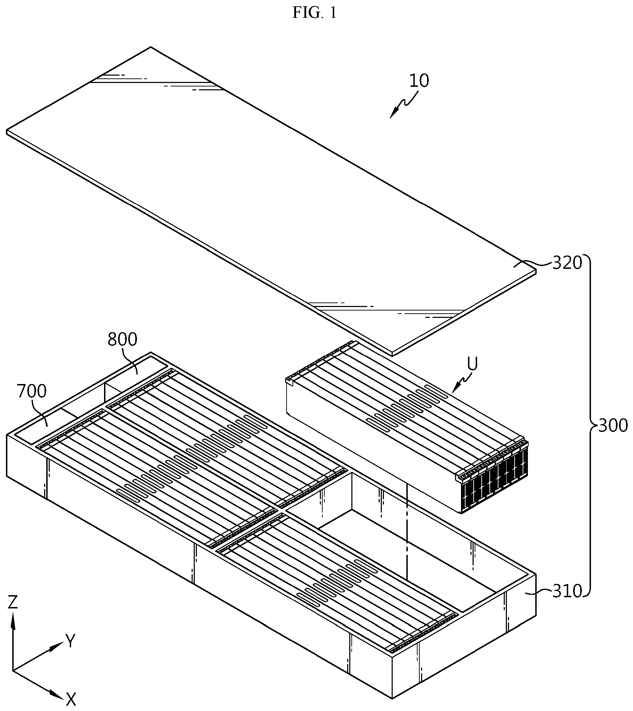

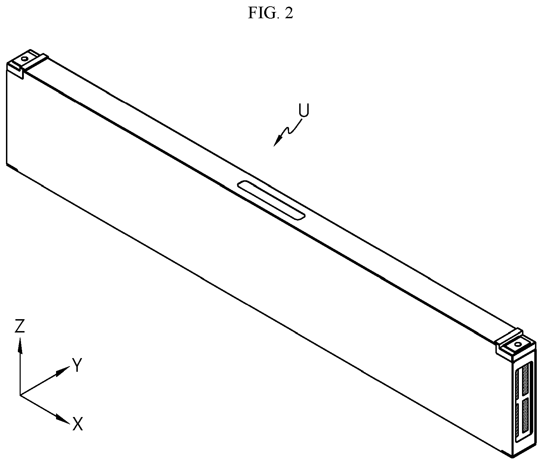

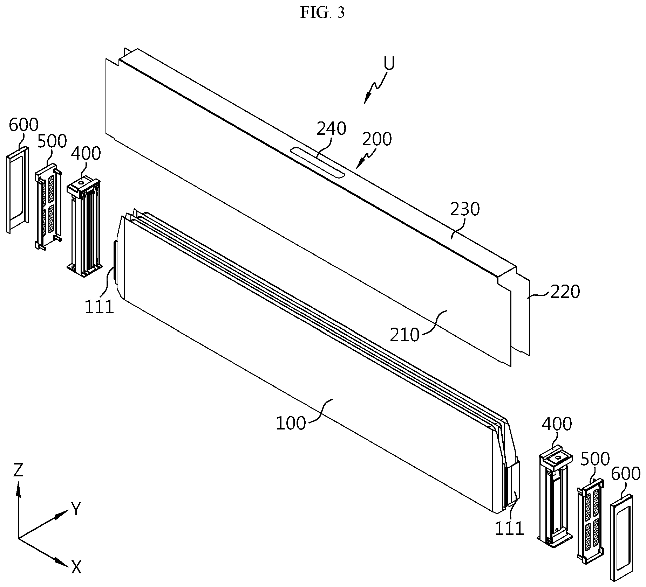

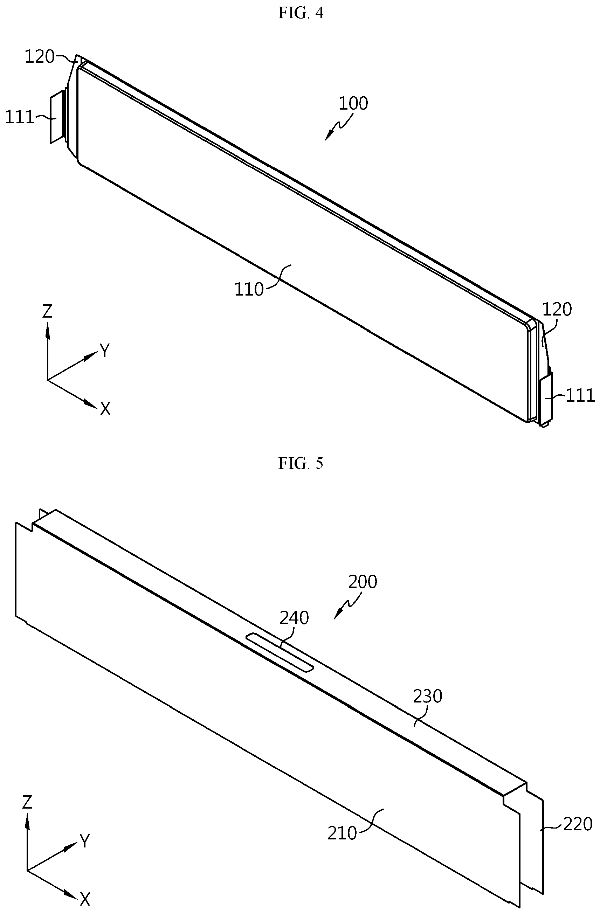

FIG. 1 is an exploded view showing some components of a battery pack according to the present disclosure. FIG. 2 is a combined view showing some components of a battery pack according to the present disclosure. FIG. 3 is an exploded view showing some components of a battery pack according to the present disclosure. FIG. 4 is a perspective view of a pouch-type battery cell included in a battery pack according to the present disclosure.

Referring to FIGS. 1 to 4, the battery pack 10 according to the present disclosure may include a plurality of pouch-type battery cells 100, a pack case 300, a cell cover 200, a bus bar assembly 400, an intermediate cover 500, and an end cover 600.

Referring to FIG. 4, the pouch-type battery cell 100 may include an electrode assembly, an electrolyte, and a pouch exterior material. The pouch-type battery cell 100 may include a storage portion 110 accommodating an electrode assembly and a sealing portion 120 extending outward from the circumference of the storage portion 110. The pouch-type battery cell 100 may include an electrode lead 111. The electrode lead 111 may be drawn out respectively in both directions of the pouch exterior material, or may be drawn out only in one side. In the illustrated example, the electrode leads 111 are drawn out in both directions of the pouch-type battery cell 100 (X-axis direction). The direction in which the electrode leads 111 are drawn out may be defined as the longitudinal direction of the pouch-type battery cell 100, in other words, it can also be said that the electrode leads 111 are drawn out forward and backward along the longitudinal direction of the pouch-type battery cell 100, respectively.

Referring to FIGS. 2 and 3, the pouch-type battery cell 100 may be surrounded by a cell cover 200 to form a cell unit U.

Referring to FIG. 1, the battery pack 10 includes a plurality of such cell units U, and thus a plurality of pouch-type battery cells 100 may be included in the battery pack 10. A plurality of pouch-type battery cells 100 may be stacked in at least one direction. The plurality of pouch-type battery cells 100 may be stacked and disposed in the left-right direction (Y-axis direction). Moreover, the plurality of pouch-type battery cells 100 may be disposed in the left-right direction, but may also be disposed in the shape of forming a plurality of rows in the front-rear direction (X-axis direction). For example, referring to FIG. 1, the plurality of pouch-type battery cells 100 are stacked in the left-right direction to form one cell unit, and two of such cell units are disposed in the left-right direction and two of them are also disposed in the front-rear direction, thereby being disposed within the pack case 300 in a 2x2 arrangement.

Referring to FIG. 1 continuously, the pack case 300 may form a space therein to accommodate the pouch-type battery cell 100. For example, the pack case 300 may include a case body 310 and a top cover 320. The case body 310 may be configured in the form of a box with an open top to accommodate a plurality of pouch-type battery cells 100 in an inner space. The top cover 320 may be configured in the form of a cover covering an upper opening (an opening located in the positive Z-axis direction) of the case body 310. On the other hand, the pack case 300 is not limited to the structure illustrated and described herein, but may also be composed of, for example, a combination of a bottom frame configured in the form of a box with an open top to accommodate a plurality of pouch-type battery cells 100 in the inner space and a top frame configured in the form of a cover covering an upper opening of the bottom frame. A cell cover 200 to be described later may be accommodated together with the plurality of pouch-type battery cells 100 in the inner space of the pack case 300. The pack case 300 may be made of a plastic or metal material. In addition, the pack case 300 may employ various exterior materials of pack cases known at the time of filing of the present disclosure.

Referring to FIGS. 2 and 3 in more detail, the cell cover 200 may be configured to surround at least a portion of the plurality of pouch-type battery cells 100 in the inner space of the pack case 300. The cell cover 200 may be configured to surround a portion of at least one pouch-type battery cell 100. The cell cover 200 may be configured to surround a portion of the plurality of pouch-type battery cells 100 stacked in the left-right direction.

The cell cover 200 may be configured to partially surround the pouch-type battery cell 100 so that a portion provided with the electrode lead 111 is exposed to the outside.

The cell cover 200 may be configured to group and unitize the plurality of pouch-type battery cells 100 included in the battery pack 10. One cell cover 200 may constitute one cell unit U. For example, one cell unit U is shown in FIG. 2 and a plurality of cell units U are shown in FIG. 1. While the cell cover 200 surrounds at least three surfaces of the pouch-type battery cell 100, the bus bar assembly 400 may be provided on a side surface that is not surrounded by the cell cover 200 for each cell unit U.

A plurality of cell units U may be included in the battery pack 10, and in this case, the cell cover 200 may be included in the battery pack 10 in plurality. When the cell cover 200 surrounds two or more pouch-type battery cells 100, the battery pack 10 may include a smaller number of cell covers 200 than the number of pouch-type battery cells 100. The pouch-type battery cells 100 in the cell unit U may be electrically connected in series and/or in parallel through the bus bar assembly 400.

The cell unit U may also be referred to as a cell bank. According to the present disclosure, the cell cover 200 is in the form of partitioning the cell banks, and thus thermal runaway and explosion may be prevented for each cell bank.

The cell cover 200 may be made of various materials to secure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. The cell cover 200 may be made of SUS material. For example, the cell cover 200 may be entirely made of SUS material.

A thermal barrier (not shown) may be further included between adjacent cell covers 200. The thermal barrier may be configured in the form of a pad made of a heat insulating material or flame suppression material, and preferably, made of a compressible material. Preferably, the thermal barrier may be configured to be in close contact with the cell cover 200 between adjacent cell covers 200. Accordingly, the thermal barrier may be configured to suppress a swelling phenomenon that may occur in the pouch-type battery cell 100. In addition, the thermal barrier may delay the spread of flames due to thermal runaway, break heat transfer, and suppress the swelling phenomenon that may occur in the pouch-type battery cell 100 at the same time, thereby further ensuring the structural stability of the battery pack 10.

The cell cover 200 may be made of various materials to secure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. The cell cover 200 may be made of SUS material. For example, the cell cover 200 may be entirely made of SUS material.

In this way, when the cell cover 200 is made of a steel material, it has excellent mechanical strength and rigidity, and thus the stacked state of the pouch-type battery cell 100 may be more stably supported. Also, in this case, it is possible to more effectively prevent damage to or breakage of the pouch-type battery cell 100 from an external impact, such as an acicular body. In addition, in this case, handling of the pouch-type battery cell 100 may be more facilitated. Also, due to the high melting point, the overall structure may be stably maintained when a flame is generated from the battery cell 100. Due to the higher melting point compared to an aluminum material, the cell cover 200 may not be melted even in flames ejected from the battery cell 100, and its shape may be stably maintained. Therefore, flame propagation prevention or delay effects between battery cells 100, venting control effects, and the like may be excellently secured.

In addition, by surrounding the battery cell 100 with the cell cover 200, the battery cell 100 may be easily made into a solid form, thereby more facilitating a configuration in which the battery cell 100 is directly stacked inside the pack case 300. Therefore, assemblability and mechanical stability of the battery pack 10 may be improved.

According to this configuration of the present disclosure, a plurality of pouch-type battery cells 100 may be stably accommodated inside the pack case 300 without a configuration such as a stacking frame like a plastic cartridge, a separate module case, or the like.

Moreover, in the case of the present disclosure, a cell to pack (CTP) type battery pack 10 using the pouch-type battery cell 100 may be implemented more efficiently. That is, the battery pack 10 may be provided in a form of directly accommodating the pouch-type battery cell 100 inside the pack case 300, rather than accommodating the pouch-type battery cell 100 inside a separate module case and then accommodating the module case inside the pack case 300. At this time, at least one side of the pouch-type battery cell 100 may be exposed to the outside of the cell cover 200 and disposed to directly face the pack case 300.

Therefore, according to this aspect of the present disclosure, there is no need to additionally provide a module case, a frame for stacking, a fastening member such as a bolt for maintaining a stacked state of cells, or the like in the battery pack 10. Accordingly, a space occupied by other components such as the module case or the frame for stacking, or a space for securing tolerances caused thereby may be eliminated. Thus, since the battery cell 100 may occupy more space as much as the space from which other components are removed, the energy density of the battery pack 10 may be further improved.

In addition, according to this aspect of the present disclosure, since a module case, a frame for stacking, a bolt, or the like are not provided, the volume or weight of the battery pack 10 may be reduced, and the manufacturing process may be simplified.

Also, according to this aspect of the present disclosure, the handling of the pouch-type battery cell 100 may be more facilitated. For example, when the plurality of pouch-type battery cells 100 are accommodated inside the pack case 300, the pouch-type battery cells 100 may be gripped by a jig or the like. In this case, the jig may not grip the pouch-type battery cell 100 directly, but may grip the cell cover 200 surrounding the pouch-type battery cell 100. Therefore, damage to or breakage of the pouch-type battery cell 100 by the jig may be prevented.

In addition, the cooling efficiency of the battery pack 10 may be further improved. In particular, in the case of an embodiment of the present disclosure, a portion of each battery cell 100 may be directly exposed to the pack case 300, so that the heat of each battery cell 100 may be effectively discharged to the outside through the pack case 300.

Referring to FIG. 3, the bus bar assembly 400 may be configured to connect the electrode leads 111 of the wrapped pouch-type battery cell 100. As shown, when the cell cover 200 is configured to surround three pouch-type battery cells 100, the bus bar assembly 400 may be configured to connect the three pouch-type battery cells 100 in parallel. When the cell cover 200 is configured to surround six pouch-type battery cells 100, the bus bar assembly 400 may be configured to connect the electrode leads 111 of three battery cells 100 among the six battery cells 100 in parallel by one bus bar and the electrode leads 111 of the other three battery cells 100 in parallel by another bus bar, and then connect them in series.

The bus bar assembly 400 may be configured to cover at least a portion of the portion where the electrode lead 111 is provided. At least a portion of the bus bar assembly 400 may be inserted into the cell cover 200. At least a portion of the bus bar assembly 400 may face the inner surface of the cell cover 200.

The bus bar assembly 400 may be provided on a side surface that is not surrounded by each cell cover 200 for each cell unit U. In this embodiment, the cell cover 200 surrounds at least three sides of the pouch-type battery cell 100, and exposes the front and rear of the pouch-type battery cell 100 where the electrode lead 111 is provided and the bottom of the pouch-type battery cell 100. Therefore, the bus bar assembly 400 may be provided in the portion where the electrode lead 111 is provided in the pouch-type battery cell 100 at the front and rear of the cell cover 200. At least a portion of the bus bar assembly 400 may be inserted into the cell cover 200.

Referring to FIG. 3, an end cover 600 may be coupled to one side of the bus bar assembly 400. The end cover 600 may be configured to cover the bus bar assembly 400 and the side surface of the pouch-type battery cell 100 that is not surrounded by the cell cover 200.

According to this configuration of the present disclosure, the cell cover 200 and the bus bar assembly 400 may be efficiently coupled as a structure in which the bus bar assembly 400 is inserted into the cell cover 200. In addition, the end cover 600 may cover a portion of the pouch-type battery cell 100 that is not surrounded by the cell cover 200, thereby providing more stable protection.

FIG. 5 is a perspective view of a cell cover included in a battery pack according to the present disclosure.

Referring to FIG. 5, the cell cover 200 may include a first side cover portion 210, a second side cover portion 220, and a top cover portion 230.

Referring to FIGS. 3 and 4 together with FIG. 5, the first side cover portion 210 may be configured to cover one side surface of the wrapped pouch-type battery cell 100. The first side cover portion 210 may be configured to cover the left side surface (a side surface located in the negative Y-axis direction) of the wrapped pouch-type battery cell 100. The first side cover portion 210 may cover the storage portion 110 and the sealing portion 120 of the wrapped pouch-type battery cell 100. The first side cover portion 210 may have a plate shape.

The second side cover portion 220 may face the first side cover portion 210. The second side cover portion 220 may cover the other side surface of the wrapped pouch-type battery cell 100. The second side cover portion 220 may be configured to cover the right side surface (a side surface located in the positive Y-axis direction) of the wrapped pouch-type battery cell 100. The second side cover portion 220 may cover the storage portion 110 and the sealing portion 120 of the wrapped pouch-type battery cell 100. The second side cover portion 220 may have a plate shape.

The cell cover 200 may be configured to support the pouch-type battery cell 100 in a state of standing between the first side cover portion 210 and the second side cover portion 220. The first side cover portion 210 and the second side cover portion 220 may be parallel to each other. Accordingly, a configuration in which the pouch-type battery cells 100 are stacked side by side in the left-right direction in a standing state may be stably maintained.

The top cover portion 230 may connect the first side cover portion 210 and the second side cover portion 220. The top cover portion 230 may cover the upper portion (a positive Z-axis direction) of the wrapped pouch-type battery cell 100. The top cover portion 230 may cover the upper portion of the storage portion 110 of the wrapped pouch-type battery cell 100. The top cover portion 230 may have a plate shape. The top cover portion 230 may include a cover venting portion 240 for discharging gas generated from the wrapped pouch-type battery cell 100. The cover venting portion 240 may have a simple hole shape in a penetrating shape. The cover venting portion 240 may be configured to have lower rigidity than the periphery so as to be broken when the pressure in the inner space of the cell cover 200 exceeds a certain pressure due to the gas generated from the wrapped pouch-type battery cell 100. For example, the cover venting portion 240 may be formed to have a thinner thickness than the periphery.

The bus assembly 400 may be inserted between the portion where the first side cover portion 210 covers the sealing portion 120 and the portion where the second side cover portion 220 covers the sealing portion 120. The first side cover portion 210 and the second side cover portion 220 may have a portion protruding further toward the electrode lead 111 than the top cover portion 230. That is, the cell cover 200 may have a shape in which portions of the first side cover portion 210 and the second side cover portion 220 are protruding more than the top cover portion 230 so that only portions of the first side cover portion 210 and the second side cover portion 220 cover the sealing portion 120 in an 'n' shape surrounding at least three surfaces of the storge portion 110.

At least some of the first side cover portion 210, the second side cover portion 220, and the top cover portion 230 may be integrally formed with each other. The first side cover portion 210, the second side cover portion 220, and the top cover portion 230 may be formed by bending one plate. This configuration of forming the bent portion in one plate to form the cell cover 200 may be implemented in various ways, such as by pressing or roll forming. According to this embodiment of the present disclosure, manufacturing of the cell cover 200 may be more simplified. Alternatively, the first side cover portion 210, the second side cover portion 220, and the top cover portion 230 may be separately manufactured, respectively, and then coupled to each other through adhesion, fitting, welding, or bolting.

The cell cover 200 may be included in the battery pack 10 in plurality. In this case, an adhesive member may be interposed between the cell covers 200. For example, an adhesive member may be interposed between the first side cover portion 210 and/or the second side cover portion 220, which are portions where the two cell covers 200 face each other, to adhere and fix them together. Through this adhesive configuration, the connection configuration between the plurality of cell covers 200 may be further strengthened. The adhesive member may be insulating to achieve insulation between the cell covers 200 that may be made of a metal material. In addition, the adhesive member may be thermally conductive. Through this adhesion, the cell cover 200 may be firmly coupled to the battery cell 100 and may help dissipate heat generated from the battery cell 100 to the outside of the battery cell 100.

The cell cover 200 may include an insulating coating layer on an inner surface. The insulating coating layer may be coated on the inner surface of the first side cover portion 210 and/or the inner surface of the second side cover portion 220. The insulating coating layer may be formed by coating, applying, or attaching any one insulating material selected from silicone resin, polyamide, and rubber. The insulating coating layer may maximize the insulating coating effect with a minimum coating amount. In addition, the insulating coating layer may be applied to the inner surface of the cell cover 200, thereby enhancing the insulation between the pouch-type battery cell 100 and the cell cover 200.

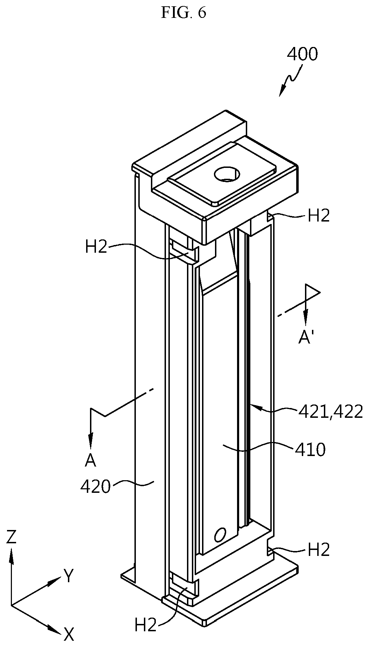

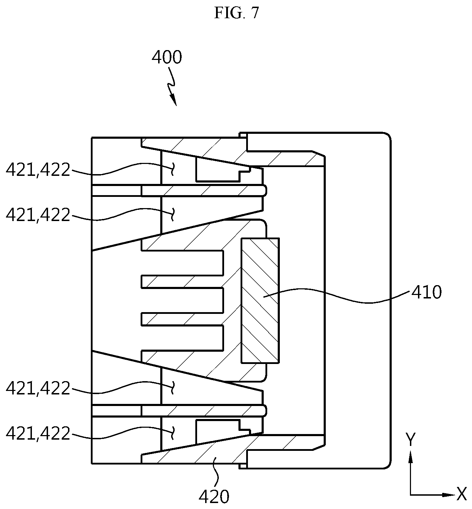

FIG. 6 is a view showing a bus bar assembly included in a battery pack according to the present disclosure. FIG. 7 is a view showing a partial cross-section of a bus bar assembly included in a battery pack according to the present disclosure, and is a cross-sectional view taken along line A-A' of FIG. 6.

Referring to FIGS. 6 and 7, the bus bar assembly 400 may include a bus bar terminal 410 and a bus bar frame 420. The bus bar terminal 410 may be connected to the electrode lead 111 of the battery cell 100. The bus bar terminal 410 may be connected to the electrode lead 111 accommodated through the lead accommodation portion 421. The bus bar terminal 410 may be electrically connected through welding by bending the electrode lead 111 accommodated through the lead accommodation portion 421 toward the bus bar terminal 410. After the welding, the intermediate cover 500 and the end cover 600 are assembled to the bus bar assembly 400 to complete the assembly process of the cell unit U.

The bus bar frame 420 may be configured such that the bus bar terminal 410 is seated thereon. The bus bar terminal 410 may be seated on an outer (positive X-axis direction) surface of the bus bar frame 420. The bus bar frame 420 may include a lead accommodation portion 421 accommodating the electrode lead 111. The lead accommodation portion 421 may have a slit shape configured to allow the electrode lead 111 to pass therethrough. The bus bar frame 420 may include a through portion 422 through which gas generated from at least a portion of the pouch-type battery cells 100 may move. The through portion 422 may have a slit or hole shape to allow gas to move, and may be any area other than the area where the electrode lead 111 is accommodated in the slit-shaped lead accommodation portion 421.

As mentioned above, the bus bar assembly 400 is provided in a portion where the electrode lead 111 is provided in the pouch-type battery cell 100 at the front and rear of the cell cover 200. In the cell cover 200, portions of the first side cover portion 210 and the second side cover portion 220 may protrude more than the top cover portion 230. A portion of the bus bar frame 420 may protrude more than the top cover portion 230, and the other portion thereof may be inserted into and in contact with the inside of the first side cover portion 210 and the inside of the second side cover portion 220 of the portion protruding more than the top cover portion 230. Through this configuration, efficient coupling between the cell cover 200 and the bus bar assembly 400 is possible.

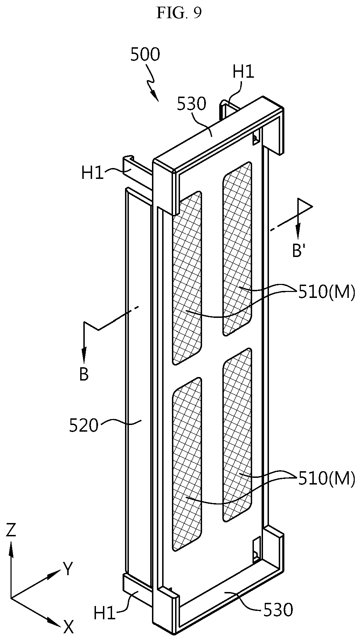

The bus bar assembly 400 may have a groove H2 for coupling to the intermediate cover 500. The groove H2 may have a recessed shape on an outer surface located in the positive X-axis direction of the bus bar assembly 400. The bus bar frame 420 may have a multi-stage shape formed to allow the side portion 520 (see FIG. 9) of the intermediate cover 500 to be fitted between an upper groove H2 (a groove located in the positive Z-axis direction) and a lower groove H2 (a groove located in the negative Z-axis direction) located on the same Y-axis. The multi-stage shape may have a width corresponding to the side portion 520 in the X-axis direction.

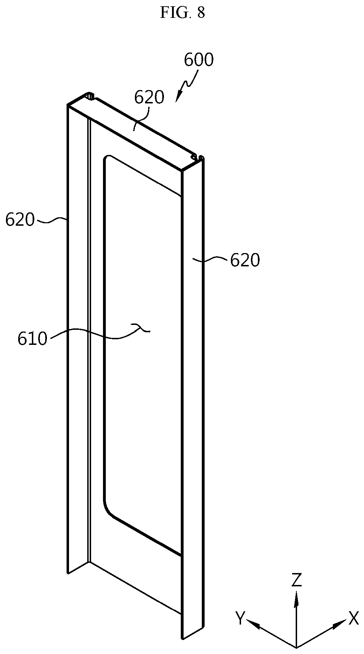

FIG. 8 is a view showing an end cover included in a battery pack according to the present disclosure.

The end cover 600 may include a first venting portion 610 communicating with the through portion 422 of the bus bar frame 420. The first venting portion 610 may be configured to discharge gas and/or flame generated from at least a portion of the pouch-type battery cell 100 surrounded by the cell cover 200 to the inner space of the pack case 300.

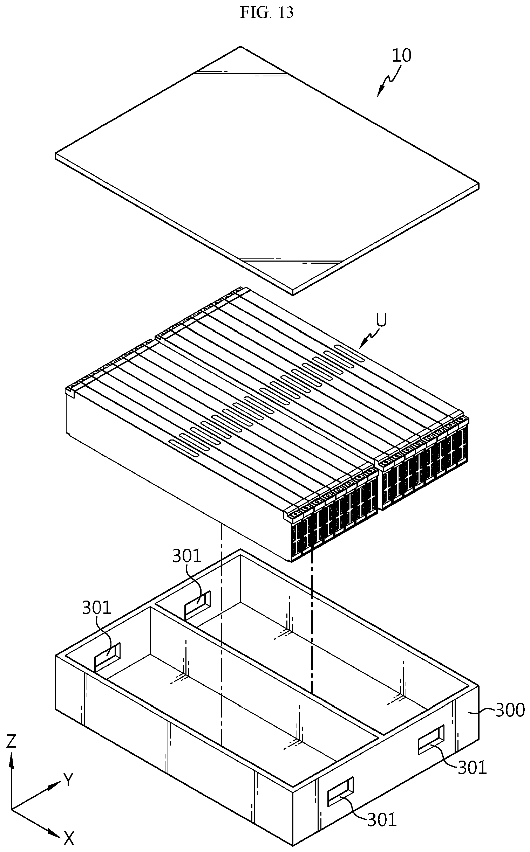

The first venting portion 610 may be in the form of a simple hole as a shape penetrating the end cover 600. In addition, it may be not only in a completely open form, but also a specific device that is closed, rather than being completely open, in a normal state and may be opened according to a change in pressure or temperature. The first venting portion 610 may be, for example, a one-way valve. This description of the first venting portion 610 may be likewise applied to the second venting portion 301 (see FIG. 13) of the pack case 300 to be described later.

According to this configuration of the present disclosure, when gas and/or flame are generated due to swelling or thermal runaway in the pouch-type battery cell 100, they may be discharged to the outside of the cell unit U through the first venting portion 610 of the end cover 600. Therefore, by inducing side venting, the gas and/or flame may be prevented from being randomly discharged through the open portion of the cell cover 200. In this way, the battery pack 10 having excellent swelling response performance may be provided.

In addition, since the first venting portion 610 is formed on the end cover 600 covering the open portion of the cell cover 200, the first venting portion 610 may have a smaller area than the area covered by the open portion of the cell cover 200 or the end cover 600. Therefore, compared to the case without the end cover 600, the discharge angle of the venting gas or flame may be minimized when the end cover 600 is provided, thereby minimizing the transition of the flame.

The end cover 600 may include a guide portion 620. The guide portion 620 may protrude in the negative X-axis direction to form a surface having a predetermined width from an end of the inner surface of the end cover 600 located in the negative X-axis direction.

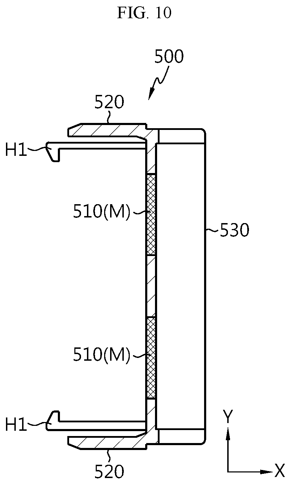

FIG. 9 is a view showing an intermediate cover included in a battery pack according to the present disclosure. FIG. 10 is a view showing a partial cross-section of an intermediate cover included in a battery pack according to the present disclosure, and is a cross-sectional view taken along line B-B' of FIG. 9.

As shown in FIG. 3, the intermediate cover 500 may be provided between the bus bar assembly 400 and the end cover 600.

Referring to FIGS. 9 and 10, the intermediate cover 500 may include a communication portion 510 to communicate with the through portion 422. The communication portion 510 may communicate with the first venting portion 610 of the end cover 600. The communication portion 510 may include a mesh member M. The mesh member M may be configured to function as a flame arrester by being provided in the form of overlapping a plurality of porous metal plates. However, the mesh member M may be provided in the form of a mesh plate between the intermediate cover 500 and the end cover 600.

The intermediate cover 500 may include a hook H1. The hook H1 may protrude from the inner surface positioned in the negative X-axis direction of the intermediate cover 500. The intermediate cover 500 may include a side portion 520 between an upper hook H1 (a hook located in the positive Z-axis direction) and a lower hook H1 (a hook located in the negative Z-axis direction) located on the same Y-axis.

Moreover, the intermediate cover 500 may include a seating portion 530. The seating portion 530 may protrude in the positive X-axis direction to form a surface having a predetermined width from an end of an outer surface of the intermediate cover 500 located in the positive X-axis direction. The seating portion 530 may be provided on the upper portion and/or lower portion of the intermediate cover 500 so that the guide portion 620 of the end cover 600 may be easily seated.

The intermediate cover 500 may include an insulating material. The insulating material may block an electrical connection between the bus bar assembly 400 and the end cover 600.

According to this configuration of the present disclosure, the flow of flame that may occur in the pouch-type battery cell 100 may be primarily blocked by the intermediate cover 500, thereby reducing the intensity of the flame and preventing a rapid discharge of the flame into the first venting portion 610. In addition, a short circuit caused by contact between the bus bar assembly 400 and the end cover 600 may be prevented.

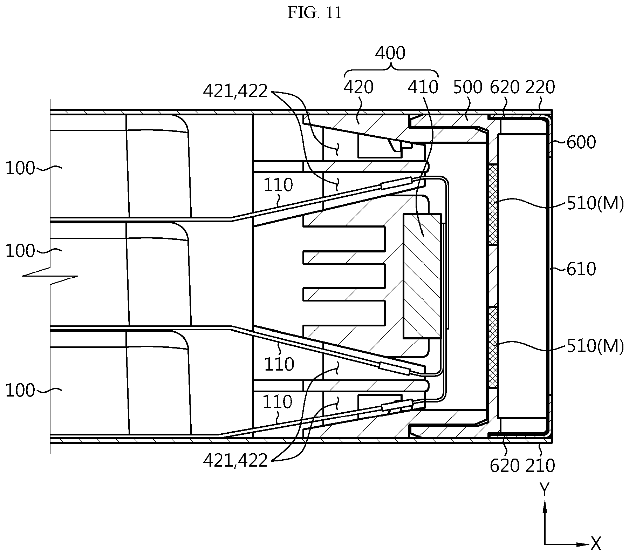

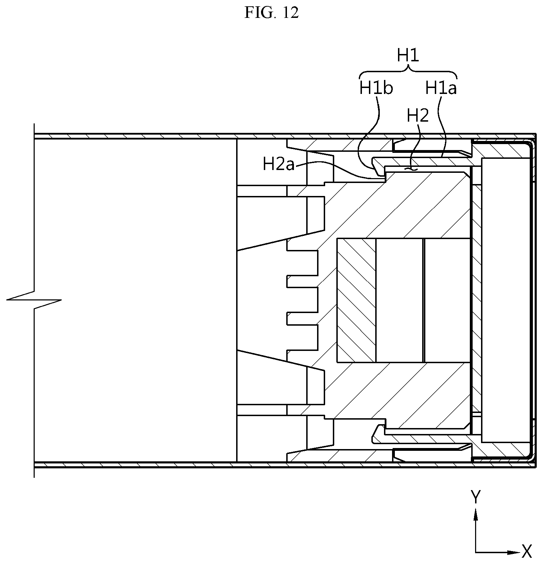

FIGS. 11 and 12 are views showing partial cross-sections of some components of a battery pack according to the present disclosure.

Referring to FIGS. 11 and 12 together with FIGS. 6 to 10, the coupling relationship of the bus bar assembly 400, the intermediate cover 500, and the end cover 600 will be examined.

Referring to FIG. 11, the bus bar assembly 400 may be configured to be coupled to the end cover 600 and/or the intermediate cover 500. Preferably, the intermediate cover 500 may be coupled to the bus bar assembly 400, and the end cover 600 may be coupled to the intermediate cover 500 sequentially. That is, the intermediate cover 500 is inserted and coupled to the inner side of the first side cover portion 210 and the second side cover portion 220 of the cell cover 200 while being inserted and coupled to the outer side of the bus bar assembly 400, and the end cover 600 is inserted and coupled to the inner side of the first side cover portion 210 and the second side cover portion 220 of the cell cover 200 while being inserted and coupled to the outer side of the intermediate cover 500.

Referring to FIGS. 11 and 12, the hook H1 of the intermediate cover 500 and the groove H2 of the bus bar assembly 400 are formed at positions corresponding to each other, so that the hook H1 overlaps or is completely fitted into the groove H2. This coupling structure is an efficient structure that may avoid excessive occupation of the placement space due to the increased overall thickness and realize assembly between the bus bar assembly 400 and the intermediate cover 500 within a limited space in the cell cover 200.

As shown in FIG. 9, the hook H1 is located at each corner of the intermediate cover 500 and extends toward the bus bar assembly 400. As shown in detail in FIG. 12, the hook H1 includes a main body H1a and a protrusion H1b, the main body H1a extends to a catching protrusion H2a of the groove H2, and the protrusion H1b is caught on the catching protrusion H2a of the groove H2. The hook H1 has a relatively small length, and it can be avoided that the hook H1 is too long and thus easily broken. Since each corner of the intermediate cover 500 has a fastening portion, the assembly between the intermediate cover 500 and the bus bar assembly 400 may be made smoother and more reliable.

The seating portion 530 of the intermediate cover 500 shown in FIGS. 9 and 10 and the guide portion 620 of the end cover 600 shown in FIG. 8 are formed at positions corresponding to each other, so that the guide portion 620 may be seated on the seating portion 530 in a state where the intermediate cover 500 and the end cover 600 are assembled with each other as shown in FIGS. 11 and 12. A predetermined width of the seating portion 530 may be approximately equal to a predetermined width of the guide portion 620. This coupling structure may form a predetermined space between the intermediate cover 500 and the end cover 600, thereby reducing the intensity of the flame or the temperature of the gas when the flame and/or gas are discharged. A mesh member may be provided in the predetermined space.

Describing the assembly process of the battery pack 10 according to the above embodiment, the battery cell 100 is surrounded by the cell cover 200, and then the bus bar assembly 400 is inserted into the open portion of the cell cover 200 and assembled. After penetrating the electrode lead 111 of the battery cell 100 through the lead accommodation portion 421, it is bent and fixed to the bus bar terminal 410 through a known bonding means such as welding. The intermediate cover 500 is assembled to the bus bar assembly 400. The end cover 600 is assembled to the intermediate cover 500. Next, the end cover 600 is welded. Due to the unique coupling structure of the bus bar assembly 400, the intermediate cover 500, and the end cover 600, coupling between them may be easily and efficiently performed.

FIG. 13 is an exploded view showing some components of a battery pack according to the present disclosure.

Referring to FIG. 13, the pack case 300 may include a second venting portion 301.

The second venting portion 301 may be configured to communicate with the first venting portion 610 of the end cover 600 to discharge gas and/or flame generated in at least one of the cell units U accommodated inside the pack case 300 to the outside of the battery pack 10. A detailed description of the second venting portion 301 may be replaced with a description of the first venting portion 610.

Referring to FIG. 1 again, the battery pack 10 according to the present disclosure may further include a battery management system (BMS) and a battery disconnect unit (BDU). The BMS is mounted in the inner space of the pack case 300 and may be configured to generally control the charge/discharge operation or data transmission/ reception operation of the pouch-type battery cell 100. The BMS may be provided in the battery pack 10 unit rather than the battery module unit. More specifically, the BMS may be provided to control the charge/discharge state, power state, performance state, and the like of the pouch-type battery cell 100 through pack voltage and pack current. The BMS estimates the state of the battery cell 100 within the battery pack 10 and manages the battery pack 10 using the estimated state information. For example, state information of the battery pack 10, such as state of charge (SOC), state of health (SOH), maximum input/output power allowance, output voltage, and the like is estimated and managed. In addition, this state information may be used to control charging or discharging of the battery pack 10, and further to estimate a replacement time of the battery pack 10. The BDU may be configured to control the electrical connection of the battery cell 100 in order to manage the power capacity and function of the battery pack 10. To this end, the BDU may include a power relay, a current sensor, a fuse, and the like. The BDU may also be provided in the battery pack 10 unit rather than the battery module unit, and various blocking units known at the time of filing of the present disclosure may be employed.

In addition, the battery pack 10 according to the present disclosure may further include various components of the battery pack 10 known at the time of filing of the present disclosure. For example, the battery pack 10 according to an embodiment of the present disclosure may further include a manual service disconnector (MSD) that allows an operator to manually disconnect the service plug to cut off power. Also, flexible bus bars or cables for interconnecting the plurality of battery cells 100 having an n×n arrangement as described above may be further included.

However, the present disclosure may apply the structure applied to the battery pack 10 described above to the battery module. That is, by applying the structure of the pack case 300 to a module case, a plurality of cell units U may be accommodated in the module case, and a venting portion may be provided in the module case, thereby configuring a battery module. This battery module is accommodated in the inner space of the pack case 300 in one or more, includes the plurality of pouch-type battery cells 100 and the cell cover 200 as described above, and may include a module case (the structure of the pack case 300 of the battery pack 10 according to the present disclosure as described above may be used as it is) accommodating the pouch-type battery cells 100 in the inner space thereof.

The battery pack 10 according to the present disclosure or the battery module described herein may be applied to various devices. These devices typically include transportation means such as an electric bicycle, an electric vehicle 1, a hybrid vehicle 1, and the like, but the present disclosure is not limited thereto. In particular, the battery pack 10 is suitable to be utilized as the battery pack 10 for the electric vehicle 1. Also, it may be used as an energy source for an ESS.

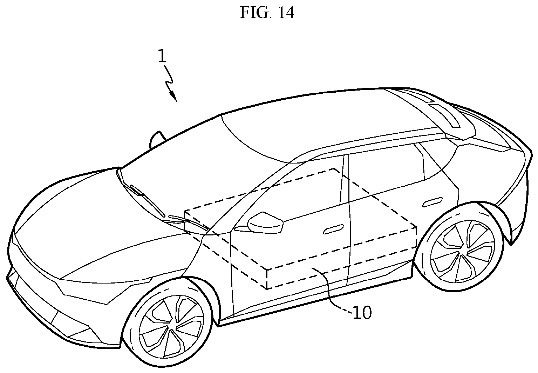

FIG. 14 is a view showing a vehicle according to the present disclosure.

Referring to FIG. 14, a vehicle 1 may include the battery pack 10 according to the present disclosure described above. Also, the vehicle 1 according to the present disclosure may further include various other components included in the vehicle 1 in addition to the battery pack 10. For example, the vehicle 1 according to the present disclosure may further include a vehicle body, a motor, a control device such as an electronic control unit (ECU), and the like in addition to the battery pack 10 according to the present disclosure.

The battery pack 10 may be disposed at a predetermined location within the vehicle 1. The battery pack 10 may be used as an electric energy source for driving the vehicle 1 by providing driving force to the motor of the electric vehicle 1. In this case, the battery pack 10 has a high nominal voltage of 100 V or more.

The battery pack 10 may be charged or discharged by an inverter according to driving of a motor and/or an internal combustion engine. The battery pack 10 may be charged by a regenerative charging device coupled to a brake. The battery pack 10 may be electrically connected to the motor of the vehicle 1 through an inverter.

In this way, the battery pack 10 provided in the vehicle 1 may provide electrical energy required for various operations of the vehicle 1. In addition, since the battery pack 10 has various effects mentioned above, the vehicle 1 including the battery pack 10 may also have such effects.

In one specific example, the battery pack 10 may omit the module case by including the cell cover 200, and thus may have a high energy density. Energy density refers to the amount of energy stored per unit weight. When the energy density of the battery pack 10 is increased, more energy is stored in the battery pack 10 at the same weight. Therefore, a vehicle 1 including such a battery pack 10 may have a variety of utilization potentials, such as increasing the mileage per charge, speeding up the acceleration, loading more luggage, making the interior space larger, and the like. In addition, when the energy density of the battery pack 10 is increased, it becomes lighter at the same energy. When the battery pack 10 becomes lighter and the vehicle 1 including the same becomes lighter, this also has several advantages in that acceleration is improved, energy efficiency is improved, durability is improved, and the like.

For another specific example, the battery pack 10 may have a high degree of safety. Since a vehicle 1 is an object directly related to human life, safety is what can never be compromised. In the pouch-type battery cell 100, there is always a risk of fire due to the physical properties of lithium. However, the battery pack 10 according to the present disclosure includes the cell cover 200, and thus, even if a thermal event occurs in the pouch-type battery cell 100, it may be prevented from being transferred to other portions. Therefore, the fire safety of the vehicle 1 including the battery pack 10 is ensured.

### [Explanation of reference signs]

1: vehicle
10: battery pack
U: cell unit
100: battery cell
111: electrode lead
110: storage portion
120: sealing portion
200: cell cover
210: first side cover portion
220: second side cover portion
230: top cover portion
300: pack case
301: second venting portion
310: case body
320: top cover
400: bus bar assembly
410: bus bar terminal
420: bus bar frame
421: lead accommodation portion
422: through portion
500: intermediate cover
510: communication portion
520: side portion
530: seating portion
600: end cover
610: first venting portion
620: guide portion
700: battery management system
800: battery blocking unit
M: mesh member
H1: hook
H1a: main body
H1b: protrusion
H2: groove
H2a: catching protrusion

## Claims

1. A battery pack (10) comprising:
a plurality of pouch-type battery cells (100) having electrode leads (111);
a pack case (300) accommodating the plurality of pouch-type battery cells (100) in an inner space;
a cell cover (200) configured to surround a portion of at least one of the plurality of pouch-type battery cells (100) in an inner space of the pack case (300), wherein the cell cover (200) comprises: a first side cover portion (210) covering one side surface of the wrapped pouch-type battery cell (100); a second side cover portion (220) facing the first side cover portion (210) and covering the other side surface of the wrapped pouch-type battery cell (100); and a top cover portion (230) connecting the first side cover portion (210) and the second side cover portion (220) and covering an upper portion of the wrapped pouch-type battery cell (100);
a bus bar assembly (400) configured to connect electrode leads (111) of the wrapped pouch-type battery cell (100);
an end cover (600) coupled to one side of the bus bar assembly (400); and
an intermediate cover (500) provided between the bus bar assembly (400) and the end cover (600), **characterized in that**
the first side cover portion (210) and the second side cover portion (220) comprise portions protruding further toward the electrode lead (111) than the top cover portion (230), and wherein the bus bar assembly (400), the intermediate cover (500), and the end cover (600) are inserted into and in contact with the inner side of the first side cover portion (210) and the inner side of the second side cover portion (220), respectively.

2. The battery pack (10) according to claim 1,
wherein the cell cover (200) is configured to partially surround the pouch-type battery cell (100) so that a portion provided with the electrode lead (111) is exposed to the outside.

3. The battery pack (10) according to claim 1,
wherein the bus bar assembly (400) is configured to cover at least a portion of the portion where the electrode lead (111) is provided.

4. The battery pack (10) according to claim 1,
wherein at least a portion of the bus bar assembly (400) is inserted into the cell cover (200).

5. The battery pack (10) according to claim 1,
wherein the bus bar assembly (400) comprises:
a bus bar terminal (410) connected to the electrode lead (111); and
a bus bar frame (420) configured such that the bus bar terminal (410) is seated, and comprising a lead accommodation portion (421) accommodating the electrode lead (111) and a through portion (422) configured to allow gas generated from at least a portion of the wrapped pouch-type battery cell (100) to move.

6. The battery pack (10) according to claim 1,
wherein the end cover (600) is coupled to the bus bar assembly (400).

7. The battery pack (10) according to claim 5,
wherein the end cover (600) comprises a first venting portion (610) communicating with the through portion (422).

8. The battery pack (10) according to claim 1,
wherein the intermediate cover (500) is coupled to the bus bar assembly (400).

9. The battery pack (10) according to claim 1,
wherein the intermediate cover (500) comprises a communication portion (510) configured to communicate with the through portion (422).

10. The battery pack (10) according to claim 7,
wherein the gas is discharged into the inner space of the pack case (300) through the first venting portion (610).

11. The battery pack (10) according to claim 9,
wherein the communication portion (510) comprises a mesh member (M).

12. The battery pack (10) according to claim 1,
wherein the intermediate cover (500) comprises an insulating material to block an electrical connection between the bus bar assembly (400) and the end cover (600).

13. The battery pack (10) according to claim 10,
wherein the pack case (300) comprises a second venting portion (301) configured to communicate with the first venting portion (610) to discharge the gas to the outside of the battery pack (10).

14. The battery pack (10) according to claim 1,
wherein the cell cover (200) is configured to support the pouch-type battery cell (100) in a state of standing between the first side cover portion (210) and the second side cover portion (220).

15. The battery pack (10) according to claim 1,
wherein the cell cover (200) comprises an insulating coating layer on at least a portion of the inner surface of the first side cover portion (210) and the inner surface of the second side cover portion (220).

16. The battery pack (10) according to claim 1,
wherein the cell cover (200) comprises an adhesive member on at least a portion of the outer surface of the first side cover portion (210) and the outer surface of the second side cover portion (220).

17. A vehicle (1) comprising a battery pack (10) according to any one of claims 1 to 16.

## Patentansprüche

1. Batteriepack (10) aufweisend:
mehrere pouchförmige Batteriezellen (100) mit Elektrodenleitungen (111);
ein Packgehäuse (300), das die mehreren pouchförmigen Batteriezellen (100) in einem Innenraum aufnimmt;
eine Zellenabdeckung (200), die konfiguriert ist, um einen Abschnitt von mindestens einer der mehreren pouchförmigen Batteriezellen (100) in einem Innenraum des Packgehäuses (300) zu umgeben, wobei die Zellenabdeckung (200) aufweist: einen ersten Seitenabdeckungsabschnitt (210), der eine Seitenfläche der umhüllten pouchförmigen Batteriezelle (100) abdeckt; einen zweiten Seitenabdeckungsabschnitt (220), der dem ersten Seitenabdeckungsabschnitt (210) zugewandt ist und die andere Seitenfläche der umhüllten pouchförmigen Batteriezelle (100) abdeckt; und einen oberen Abdeckungsabschnitt (230), der den ersten Seitenabdeckungsabschnitt (210) und den zweiten Seitenabdeckungsabschnitt (220) verbindet und einen oberen Abschnitt der umhüllten pouchförmigen Batteriezelle (100) abdeckt;
eine Sammelschienenanordnung (400), die konfiguriert ist, um Elektrodenleitungen (111) der umhüllten pouchförmigen Batteriezelle (100) zu verbinden;
eine Endabdeckung (600), die mit einer Seite der Sammelschienenanordnung (400) gekoppelt ist; und
eine Zwischenabdeckung (500), die zwischen der Sammelschienenanordnung (400) und der Endabdeckung (600) bereitgestellt ist,
**dadurch gekennzeichnet, dass** der erste Seitenabdeckungsabschnitt (210) und der zweite Seitenabdeckungsabschnitt (220) Abschnitte aufweisen, die weiter in Richtung der Elektrodenleitung (111) vorstehen als der obere Abdeckungsabschnitt (230), und wobei die Sammelschienenanordnung (400), die Zwischenabdeckung (500) und die Endabdeckung (600) in die, und in Kontakt mit der, Innenseite des ersten Seitenabdeckungsabschnitts (210) bzw. Innenseite des zweiten Seitenabdeckungsabschnitts (220) eingesetzt sind.

2. Batteriepack (10) nach Anspruch 1,
wobei die Zellenabdeckung (200) konfiguriert ist, die pouchförmige Batteriezelle (100) teilweise zu umgeben, so dass ein Abschnitt, der mit der Elektrodenleitung (111) bereitgestellt ist, nach außen freiliegt.

3. Batteriepack (10) nach Anspruch 1,
wobei die Sammelschienenanordnung (400) konfiguriert ist, mindestens einen Abschnitt des Abschnitts, wo die Elektrodenleitung (111) bereitgestellt ist, abzudecken.

4. Batteriepack (10) nach Anspruch 1,
wobei mindestens ein Abschnitt der Sammelschienenanordnung (400) in die Zellenabdeckung (200) eingesetzt ist.

5. Batteriepack (10) nach Anspruch 1,
wobei die Sammelschienenanordnung (400) aufweist:
einen Sammelschienenanschluss (410), der mit der Elektrodenleitung (111) verbunden ist; und
einen Sammelschienenrahmen (420), der so konfiguriert ist, dass der Sammelschienenanschluss (410) sitzt, und einen Leitungsaufnahmeabschnitt (421), der die Elektrodenleitung (111) aufnimmt, und einen Durchgangsabschnitt (422) aufweist, der konfiguriert ist, eine Strömung von Gas, das von mindestens einem Abschnitt der umhüllten pouchförmigen Batteriezelle (100) erzeugt wird, zu ermöglichen.

6. Batteriepack (10) nach Anspruch 1,
wobei die Endabdeckung (600) mit der Sammelschienenanordnung (400) gekoppelt ist.

7. Batteriepack (10) nach Anspruch 5,
wobei die Endabdeckung (600) einen ersten Entlüftungsabschnitt (610) aufweist, der mit dem Durchgangsabschnitt (422) in Verbindung steht.

8. Batteriepack (10) nach Anspruch 1,
wobei die Zwischenabdeckung (500) mit der Sammelschienenanordnung (400) gekoppelt ist.

9. Batteriepack (10) nach Anspruch 1,
wobei die Zwischenabdeckung (500) einen Verbindungsabschnitt (510) aufweist, der konfiguriert ist, mit dem Durchgangsabschnitt (422) in Verbindung zu stehen.

10. Batteriepack (10) nach Anspruch 7,
wobei das Gas durch den ersten Entlüftungsabschnitt (610) in den Innenraum des Packgehäuses (300) abgegeben wird.

11. Batteriepack (10) nach Anspruch 9,
wobei der Verbindungsabschnitt (510) ein Maschenelement (M) aufweist.

12. Batteriepack (10) nach Anspruch 1,
wobei die Zwischenabdeckung (500) ein isolierendes Material aufweist, um eine elektrische Verbindung zwischen der Sammelschienenanordnung (400) und der Endabdeckung (600) zu blockieren.

13. Batteriepack (10) nach Anspruch 10,
wobei das Packgehäuse (300) einen zweiten Entlüftungsabschnitt (301) aufweist, der konfiguriert ist, mit dem ersten Entlüftungsabschnitt (610) in Verbindung zu stehen, um das Gas von dem Batteriepack (10) nach außen abzugeben.

14. Batteriepack (10) nach Anspruch 1,
wobei die Zellenabdeckung (200) konfiguriert ist, die pouchförmige Batteriezelle (100) in einem Zustand zu stützen, in dem sie zwischen dem ersten Seitenabdeckungsabschnitt (210) und dem zweiten Seitenabdeckungsabschnitt (220) steht.

15. Batteriepack (10) nach Anspruch 1,
wobei die Zellenabdeckung (200) eine isolierende Beschichtungsschicht auf mindestens einem Abschnitt der Innenfläche des ersten Seitenabdeckungsabschnitts (210) und der Innenfläche des zweiten Seitenabdeckungsabschnitts (220) aufweist.

16. Batteriepack (10) nach Anspruch 1,
wobei die Zellenabdeckung (200) ein Klebeelement auf mindestens einem Abschnitt der Außenfläche des ersten Seitenabdeckungsabschnitts (210) und der Außenfläche des zweiten Seitenabdeckungsabschnitts (220) aufweist.

17. Fahrzeug (1) aufweisend einen Batteriepack (10) nach einem der Ansprüche 1 bis 16.

## Revendications

1. Bloc-batterie (10) comprenant :
une pluralité de cellules de batterie de type poche (100) possédant des conducteurs d'électrode (111) ;
un boîtier de bloc (300) accueillant la pluralité de cellules de batterie de type poche (100) dans un espace intérieur ;
un couvercle de cellule (200) configuré pour entourer une partie d'au moins une de la pluralité de cellules de batterie de type poche (100) dans un espace intérieur du boîtier de bloc (300), le couvercle de cellule (200) comprenant : une première partie de couvercle latéral (210) couvrant une surface latérale de la cellule de batterie de type poche (100) enveloppée ; une deuxième partie de couvercle latéral (220) située face à la première partie de couvercle latéral (210) et couvrant l'autre surface latérale de la cellule de batterie de type poche (100) enveloppée ; et une partie de couvercle supérieur (230) raccordant la première partie de couvercle latéral (210) à la deuxième partie de couvercle latéral (220), et couvrant une partie supérieure de la cellule de batterie de type poche (100) enveloppée ;
un ensemble de barre omnibus (400) configuré pour connecter des conducteurs d'électrode (111) de la cellule de batterie de type poche (100) enveloppée ;
un couvercle terminal (600) couplé à un côté de l'ensemble de barre omnibus (400) ; et
un couvercle intermédiaire (500) agencé entre l'ensemble de barre omnibus (400) et le couvercle terminal (600),
**caractérisé en ce que**
la première partie de couvercle latéral (210) et la deuxième partie de couvercle latéral (220) comprennent des parties faisant davantage saillie vers le conducteur d'électrode (111) que la partie de couvercle supérieur (230), et l'ensemble de barre omnibus (400), le couvercle intermédiaire (500), et le couvercle terminal (600) sont insérés dans le côté intérieur de la première partie de couvercle latéral (210) et le côté intérieur de la deuxième partie de couvercle latéral (220) respectivement, et au contact de ceux-ci.

2. Bloc-batterie (10) selon la revendication 1,
le couvercle de cellule (200) étant configuré pour entourer partiellement la cellule de batterie de type poche (100) de sorte qu'une partie agencée avec le conducteur d'électrode (111) soit exposée vers l'extérieur.

3. Bloc-batterie (10) selon la revendication 1,
l'ensemble de barre omnibus (400) étant configuré pour couvrir au moins une partie de la partie où est agencé le conducteur d'électrode (111).

4. Bloc-batterie (10) selon la revendication 1,
au moins une partie de l'ensemble de barre omnibus (400) étant insérée dans le couvercle de cellule (200).

5. Bloc-batterie (10) selon la revendication 1,
l'ensemble de barre omnibus (400) comprenant :
une borne de barre omnibus (410) connectée au conducteur d'électrode (111) ; et
un cadre de barre omnibus (420) configuré de sorte que la borne de barre omnibus (410) soit calée, et comprenant une partie de logement du conducteur (421) recevant le conducteur d'électrode (111) et une partie traversante (422) configurée pour permettre le déplacement de gaz généré par au moins une partie de la cellule de batterie de type poche (100) enveloppée.

6. Bloc-batterie (10) selon la revendication 1,
le couvercle terminal (600) étant couplé à l'ensemble de barre omnibus (400).

7. Bloc-batterie (10) selon la revendication 5,
le couvercle terminal (600) comprenant une première partie d'évacuation (610) communiquant avec la partie traversante (422).

8. Bloc-batterie (10) selon la revendication 1,
le couvercle intermédiaire (500) étant couplé à l'ensemble de barre omnibus (400).

9. Bloc-batterie (10) selon la revendication 1,
le couvercle intermédiaire (500) comprenant une partie de communication (510) configurée pour communiquer avec la partie traversante (422).

10. Bloc-batterie (10) selon la revendication 7,
le gaz étant refoulé dans l'espace intérieur du boîtier de bloc (300) à travers la première partie d'évacuation (610).

11. Bloc-batterie (10) selon la revendication 9,
la partie de communication (510) comprenant un élément maillé (M).

12. Bloc-batterie (10) selon la revendication 1,
le couvercle intermédiaire (500) comprenant une matériau isolant pour bloquer toute connexion électrique entre l'ensemble de barre omnibus (400) et le couvercle terminal (600).

13. Bloc-batterie (10) selon la revendication 10,
le boîtier de bloc (300) comprenant une deuxième partie d'évacuation (301) configurée pour communiquer avec la première partie d'évacuation (610) pour évacuer le gaz à l'extérieur du bloc-batterie (10).

14. Bloc-batterie (10) selon la revendication 1,
le couvercle de cellule (200) étant configuré pour supporter la cellule de batterie de type poche (100) dans un état où il se tient entre la première partie de couvercle latéral (210) et la deuxième partie de couvercle latéral (220).

15. Bloc-batterie (10) selon la revendication 1,
le couvercle de cellule (200) comprenant une couche de revêtement isolant sur au moins une partie de la surface intérieure de la première partie de couvercle latéral (210) et de la surface intérieure de la deuxième partie de couvercle latéral (220).

16. Bloc-batterie (10) selon la revendication 1,
le couvercle de cellule (200) comprenant un élément adhésif sur au moins une partie de la surface extérieure de la première partie de couvercle latéral (210) et de la surface extérieure de la deuxième partie de couvercle latéral (220).

17. Véhicule (1) comprenant un bloc-batterie (10) selon une quelconque des revendications 1 à 16.
